Europäisches Patentamt

European Patent Office

Office européen des brevets

(11) Publication number: **0 338 966 B1**

## EUROPEAN PATENT SPECIFICATION

(45) Date of publication of patent specification: **28.12.94**   (51) Int. Cl.5: **G01D 5/20**

(21) Application number: **89710006.1**

(22) Date of filing: **22.01.89**

(54) **Position compensation winding for displacement transducer.**

(30) Priority: **22.01.88 US 147142**
**22.01.88 US 146824**
**22.01.88 US 147241**
**07.03.88 US 165138**
**07.03.88 US 164979**
**22.01.88 US 146823**

(43) Date of publication of application:
**25.10.89 Bulletin 89/43**

(45) Publication of the grant of the patent:
**28.12.94 Bulletin 94/52**

(84) Designated Contracting States:
**AT BE CH DE FR GB IT LI NL SE**

(56) References cited:
**WO-A-87/00951**      **AT-A- 300 391**
**DE-A- 3 303 994**    **DE-A- 3 534 460**
**GB-A- 903 171**       **GB-A- 1 558 206**
**US-A- 2 477 749**   **US-A- 2 489 114**
**US-A- 2 621 324**   **US-A- 3 017 590**
**US-A- 4 134 065**   **US-A- 4 350 954**
**US-A- 4 623 840**   **US-A- 4 667 158**

**SOVIET PATENTS ABSTRACTS, Week 8848,**
**18 January 1989, Derwent Publications Ltd.,**
**London, GB; & SU-A-1 383 087**

**PATENT ABSTRACTS OF JAPAN, vol. 14, no.**
**402 (P-1099), 30 August 1990 & JP-A-02 156**
**113**

(73) Proprietor: **DATA INSTRUMENTS INC.**
**100 Discovery Way**
**Acton, MA 01720 (US)**

(72) Inventor: **Redlich, Robert W.**
**9 Grand Park Blvd.**
**Athens, Ohio 45701 (US)**
Inventor: **Scheck, Christopher G.**
**161 B Hooper Road**
**Athens, Ohio 45701 (US)**

(74) Representative: **Matschkur, Götz, Lindner Patent- und Rechtsanwälte**
**Postfach 11 91 09**
**D-90101 Nürnberg (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

This invention relates to a displacement transducer of the type having a coil and an electrically conducting, non-ferromagnetic wall moving in telescoping relation with the coil and excited by a signal of a sufficiently high frequency that skin effect in the wall permits wall displacement to vary the reluctance of the coil flux path and thereby vary its inductance, approximately proportionally to displacement.

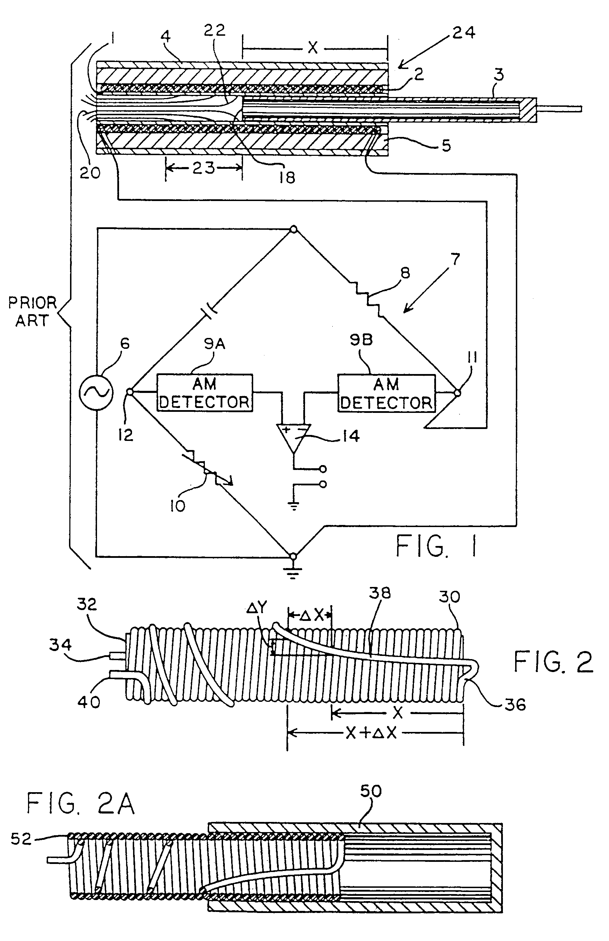

A linear displacement transducer of this type is shown in the previous U.S. Patent 4,667,158 and is illustrated in Fig. 1. The transducer is a helical coil 2 of an electrical conductor wound at a uniform pitch on cylindrical thin-walled tube or bobbin 1 of an electrical insulator or a poor conductor such as stainless steel. Preferably, the tube also has suitable properties for use as a dry bearing surface, for example Teflon. The helical coil 2 is fixed to the first of two relatively movable bodies for which the relative displacement is to be measured.

A non-ferromagnetic, electrically conducting rod or preferably a tube forms a core 3 which is slidable within the bobbin 1. It is made, for example, of aluminum or copper and is fixed to the second of the two relatively moving bodies.

Preferably the coil is surrounded by a low and constant reluctance path so that changes in coil inductance with respect to core 3 movement is maximized. This is preferably accomplished by positioning a material, such as ferrite 5, having a high magnetic permeability, but low electrical conductivity surrounding the coil. This material provides the desired low magnetic reluctance while not permitting the formation of significant eddy currents and not exhibiting a substantial skin effect.

Preferably this high permeability, low conductivity material is itself surrounded with a tubular shield 4 of high electrical conductivity to confine the field of the coil to the ferrite 5 and the skin layer of the shield 4 and to prevent external fields from linking with the coil 2. The shield 4 confines the magnetic flux generated from stray fields by the current in the coil 2 and shields it over a wide frequency range. It is preferably made of a material having both high electrical conductivity and high magnetic permeability, such as soft iron or low carbon steel.

An AC electrical energy source 6 and a detector circuit means 7, preferably in the form of a bridge circuit, are electrically connected to the coil 2. The AC source 6 operates at a frequency, preferably in the range of 50-200Khz, which may be designated a carrier frequency $f_c$. An important key to the efficient and effective operation of a transducer of this type is that the frequency of the source 6 be high enough that the skin depth in the core 3 is substantially less than the radius of the core and less than the thickness of the wall of the tube.

The source 6 drives the coil through a resistor 8 which has a resistance which is much greater than the inductive reactance of the coil and its associated structures so that effectively the transducer is driven by a current source. Therefore, the voltage across the transducer coil 5 is approximately $(V/R)*(2 pi f_c L)$.

The detector circuit 7 detects a signal at an AM detector 9 which is proportional to the inductance of the coil 2 and its associated structures. The coil voltage is proportional to coil inductance, which in turn is proportional to the displacement of the core 3.

In the operation of the basic concept of the displacement measurement apparatus of Fig. 1, the AC source 6 excites the bridge circuit, including the transducer coil 2 in one of its branches. Because of the skin effect at the frequency at which the AC source 6 is operating, magnetic fields in the core 3 are confined to a thin layer approximately equal to the sum of the skin depth in the core material which is typically on the order of 0.25 millimeters thick plus the spacing from the exterior of the core 3 to the interior of the coil 2. Because the skin depth is considerably less than the radius of the core, the magnetic flux is confined to a path in the region of the core 3 which has a considerably smaller cross-sectional area than the flux path where there is no core 3. Since reluctance is inversely proportional to the cross-sectional area of the flux path, the core 3 has the effect of substantially increasing the reluctance and therefore substantially reducing the magnetic flux in the region of the core. With the core 3 partially inserted in the coil 2 of the transducer, the interior of the coil 2 can be divided into the region occupied by the core 3 where magnetic flux is low, and the region unoccupied by the core where magnetic flux is relatively high compared to the core region. Therefore, the flux linkages of the coil are substantially reduced as a result of the insertion of the core and are reduced in proportion of the extent of the insertion of the core within the coil 2. This, in turn, proportionally reduces the self inductance of the coil 2. Thus, the movable core varies the self inductance and the impedance and therefore varies the voltage across the transducer in proportion to its displacement.

While a great variety of detector circuits are known to those skilled in the art for detecting a signal which is proportional to the changes in coil inductance or voltage, the detector circuit of Fig. 1 operates well. A bridge is designed to be brought into AC amplitude balance by adjustable resistor 10 when the core 3 is centered within the coil 2. The AC source 6 is a signal at a frequency $f_c$. The amplitude of the transducer signal at frequency $f_c$ at the node 11 of the bridge is proportional to the displacement of the core 3. The amplitude of the balance signal at frequency $f_c$ at the opposite node 12 is adjusted so that it is equal to the amplitude of the transducer signal at node 11 when the core 3 is centered within the coil 2. A detector circuit means comprising two AM detectors 9A and 9B and a differential amplifier 14 are provided to detect the difference between the modulation amplitudes at the nodes 11 and 12.

The displacement of the core 3 is effectively providing an amplitude modulated signal at the terminal 11, the amplitude of which is proportional to displacement of the core 3 and may be detected by the AM detector 9B to provide an output signal which is directly proportional to the displacement of the core 3. The balance signal at node 12 is detected by an AM detector circuit 9A. The output signals from the two AM detectors 9A and 9B are applied to a differential amplifier 14, the output of which provides a signal $V_{out}$ which is proportional to the displacement of the core 3. Further details of the basic concept are described in more detail in the above cited U.S. Patent.

One problem with a transducer constructed as described above is that its inductance and therefore the output voltage of the detector means is not exactly proportional to the relative displacement $x$ shown in Fig. 1 of the core 3 into the coil 2. The relative displacement $x$ is measured as the position of the interior end 18 of the core 3 with respect to the right end 24 of the coil 2. If the transducer were operating as an ideal linear transducer, the output voltage signal would be proportional to the displacement $x$ and therefore $dV/dx$ would be constant over the entire length of the coil.

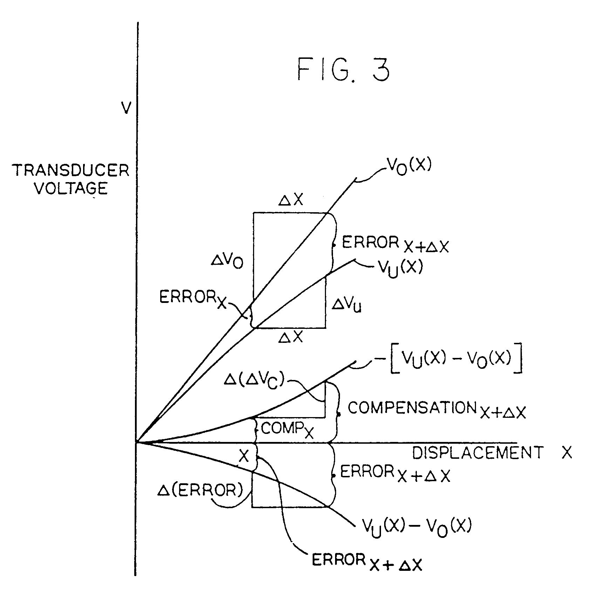

Instead, however, for the simple coil illustrated in Fig. 1, $dV/dx$ decreases as the displacement $x$ increases so that the transfer function, designated $V_u(x)$ in Fig. 3 falls below the ideal linear relationship $V_o(x)$ as $x$ increases. This occurs for two reasons.

The loss in the device of Fig. 1 increases as the core 3 is displaced further into the coil 2. Losses become greater as the core displacement increases because the core itself is relatively lossy and therefore there is more lossy core in the field as the core insertion or displacement $x$ increases.

The non-uniformity of the flux in the transition region 23 adjacent the left end of the core 3 also contributes significantly to this nonlinearity. Fig. 1 illustrates a portion of the flux lines 20 which have a radial component in the transition region 23 of the flux 22 to join the boundaries of the uniform flux on opposite sides of this transition region 23. This transition region produces an end effect which causes an increasing departure from linearity as the displacement of the core 3 increases. The reason the end effects increase as the displacement of the core 3 into the coil 2 increases is that, as the insertion $x$ increases, the transition region 23 occupies an increasingly greater proportion of the segment of the coil 2 which is not occupied by the core 3. There is, of course, no sharp boundary for the transition region. However, we have found that end effects become negligible within approximately three coil diameters from the end 18 of the core 3. The total departure of the transfer function $V_u(x)$ for the simple, uncompensated coil illustrated in Fig. 1 from the transfer function $V_o(x)$ of an ideal, linear coil is designated as the ERROR in Fig. 3.

It is therefore a problem to substantially eliminate this error so that transducer displacement becomes a more accurate and precise linear function of core displacement into the coil.

From DE-A-33 03 994 a position transducer for measuring short distances between two members which are moveable relative to one another is already known. The transducer comprises an electromagnetic coil wound on a hollow dielectric former, a ferrite core movable longitudinally within the former to vary the inductance of the coil. Furthermore, there is an oscillator circuit having a tank circuit to control the frequency thereof, said coil forming part of said tank circuit and having a nonlinear winding such that the output frequency of the oscillator circuit varies proportionately with relative penetration of the core within the coil. The coil can be of varying pitch or can have even pitch with sections having multiple layers. However, a winding machine capable of constantly varying its winding pitch is required therefor. To facilitate this type of winding the coil former should be a moulded part with a helical groove of constantly varying pitch into which the wire would be wound.

An object of the invention is to provide such an improvement in a manner which may be economically mass produced.

The invention improves the displacement measurement apparatus described above by means of a compensation winding which is wound in coaxial relationship to the coil. The compensation winding has a pitch which is a decreasing function of its distance $x$ from the end of the coil which is nearest the wall of the core when the core wall and the coil are in their least overlapping relationship. The compensation winding decreases and ideally eliminates the non-linearity of the inductance of the coil as a function of core wall displacement.

Brief Description Of Drawings

Fig. 1 is a diagrammatic and schematic drawing illustrating the prior art transducer and measuring apparatus illustrated in my prior patent 4,667,158.

Fig. 2 is a view in side elevation of the compensation winding embodying the present invention.

Fig. 2A is a view in axial section of an alternative embodiment of the invention.

Fig. 3 is a graph illustrating the design and operation of the preferred embodiment of the invention.

Fig. 2 illustrates the coil portion of a displacement measuring transducer embodying the compensation winding of the present invention. The simple, uncompensated coil 30 begins at the left end 32 of the coil 30 at the conductor end 34. It extends in helical windings to the right end 36 of the conductor. The same conductor then continues back to form the compensation winding 38 of the present invention which begins at the right end 36 of the coil 30 and doubles back over the main winding 30 to terminate at conductor end 40. A compensation winding ordinarily consists of only a few turns, but has a smoothly and continuously decreasing pitch as it progresses from the right end to the left end of the uncompensated main winding 30. More specifically, the compensation winding has a pitch which is a decreasing function of the distance from the end of the coil 30 which is nearest the core 3 or sliding wall 50 when the coil and the wall are in their least overlapping relationship.

The compensation winding is wound in a coaxial preferably telescoped relationship to the coil either within or outside of the uncompensated main coil 30. The compensation winding may, as illustrated in Fig. 2A, be wound within the interior of the uncompensated main winding. This accommodates embodiments of the invention in which the sliding wall of electrically conducting, non-ferromagnetic material is a tube 50 which surrounds instead of sliding within the main coil 52. The compensation winding is wound in the same direction as the uncompensated main winding 30 and preferably is a continuation of the identical coil conductor.

A compensation signal which is equal and opposite to the error is induced in the compensation winding and added to the voltage across the main winding. The error is the difference between the ideal linear function $V_o(x)$ and the nonlinear function $V_u(x)$ in Fig. 3 of an uncompensated coil.

The compensation winding structure may be optimized by the use of design equations developed in accordance with the present invention in order to optimize the compensation and thereby make the transfer function of the transducer substantially linear. Referring now to Fig. 3, the linear transfer function relating transducer voltage V to transducer displacement x is illustrated for both an ideal linear transfer function $V_o(x)$ and an actual measured and plotted uncompensated coil transfer function $V_u(x)$. The difference between the graphs of these functions represents the error which the compensation winding should compensate for and thereby eliminate. Fig. 3 illustrates the error at two different displacement positions x and $x + \Delta x$.

The main uncompensated coil and the compensation winding may be described in terms of the following variables, most of which are illustrated in Fig. 3.

Definitions of Variables:

1. C = circumference of the main, uncompensated coil.
2. $N_o$ = linear turns density in turns/cm of the uncompensated main coil
3. N(x) = linear turns density in turns/cm of the compensated coil and is a function of x.
4. $N_c(x)$ = linear turns density in turns/cm of the compensation winding and is a function of x.
5. x = core position in cm.
6. $\Delta x$ = incremental core displacement from x to $x + \Delta x$.
7. $\Delta y$ = circumferential extent of compensation winding in an increment $\Delta x$ in cm.
8. $\Delta V_u$ = change in uncompensated output voltage as the core goes from x to $x + \Delta x$ in volts and is a function of x.
9. $\Delta V_o$ = change in the output voltage of an ideal, linear transducer as the core goes from x to $x + \Delta x$ in volts.
10. error = $V_o - V_u$, the difference in output voltage between an ideal and an uncompensated transducer.
11. E = $\Delta V_o - V_u$, the change in error in increment $\Delta x$.
12. $(\Delta V_c)$ = component of change in the compensated transducer voltage arising from the compensation winding as x goes from x to $x + \Delta x$ in volts and is a function of x.
13. $\Delta T_c$ = number of the compensation winding turns in any increment $\Delta x$.

From Fig. 3 it is apparent that the incremental error denoted E for the uncompensated transducer in going from the error at x to the error at $x + \Delta x$ can be described by the equation:

14. E = $\Delta V_u - \Delta V_o$

For a transducer which has a compensation winding in accordance with the present invention, the number of turns per unit of length along the coil may be expressed by the following equation:

15. N(x) = $N_o + N_c(x)$

For any inductor driven by a current source and with substantially constant N(x) the following proportionalities are both true if end effects are small.

16. $\Delta V = K_1 \Delta L$

and

17. $\Delta L = K_2 N^2(x) \Delta x$

18. Therefore $\Delta V = K N^2(x) \Delta x$

If equation 15 is substituted in equation 18 then:

19. $\Delta V = K[N_o + N_c(x)]^2 \Delta x$

If we make the practical assumption that $N_o \gg N_c(x)$ then equation 20 simplifies to:

20. $\Delta V = K \Delta x(N_o^2 + 2N_o N_c(x))$

The two terms on the right side of the equation can be seen to represent components of the change in coil voltage resulting respectively from the uncompensated main coil without end effects and from the compensation winding. This may be expressed by the equations:

21. $\Delta V_o = K N_o^2 \Delta x$

22. $(\Delta V_c) = 2K N_o N_c \Delta x$

From equations 21 and 22 the following proportionality may be stated:

23.

$$\frac{(\Delta V_c)}{\Delta V_o} = \frac{2N_c}{N_o}$$

The desired result is cancellation of E by $\Delta V_c$. From equation 23, this result is achieved if:

24.

$$N_c = \frac{N_o E}{2 \Delta V_o}$$

Equation 24 gives for any interval $\Delta x$ between $x$ and $x + \Delta x$, the number of compensation turns per centimeter $N_c(x)$ in that interval, i.e. the reciprocal of the spacing between turns for the compensation winding.

The number of compensation turns $\Delta T_c$ in the interval $\Delta x$ is:

25. $\Delta T_c = N_c \Delta x$

Substituting equation 25 in equation 24 provides that the number of compensation turns in the incremental interval $\Delta x$ is:

26.

$$\Delta T_c = \frac{N_o \Delta(\text{error}) \Delta x}{2 \Delta V_o}$$

This can be rearranged to be stated as:

27.

$$\Delta T_c = \frac{\Delta(\text{error})}{2 \left( \dfrac{\Delta V_o}{N_o \Delta x} \right)}$$

However, the volts per turn of the uncompensated coil without end effects $V_T$ can be described as:

28.

$$V_T = \frac{\Delta V_o}{N_o \Delta x}$$

Therefore, the number of compensation turns in any incremental distance from $x$ to $x + \Delta x$ is stated by the equation:

29.

$$\Delta T_c = \frac{E}{2V_T}$$

Because, as illustrated, the number of turns is often a fraction of a turn in an increment $\Delta x$, an alternative manner of mathematically describing the compensation winding may also be obtained which defines the compensation winding in terms of its circumferential advance as a function of position $x$. Since one turn of winding is a circumferential advance of C, the circumferential advance $\Delta y$ in the incremental interval $\Delta x$ is given by:

30. $\Delta y = C \Delta T_c$

Therefore, from equations 29 and 30 the circumferential advance may be given by the formula:

31.

$$\Delta y = \frac{C(\Delta(error))}{2V_T}$$

In order to construct a compensation winding in accordance with the present invention an uncompensated main coil is assembled into an uncompensated transducer and displacement measuring circuit. The output voltage of the AM detector 9, which is proportional to the voltage across the coil 2 of Fig. 1, is measured and recorded for each of a plurality of spaced apart positions of the core 3 within the operating range of the transducer. These are plotted on a graph similar to Fig. 3, and the plot represents the uncompensated transfer function for the output signal amplitude as a function of displacement. This provides a plot of $V_u(x)$. $V_o(x)$ is then determined by finding the straight line linear transfer function which is tangential to the uncompensated transfer function $V_u(x)$ at the minimum displacement of $x = 0$.

The difference between these two plotted transfer functions at each of the displacement positions at which a measurement was taken represents the error at each of those displacement positions.

The difference between the errors at each pair of adjacent positions is the error which is substituted in equation 31. In order to obtain $V_T$, the volts/turn, the number of turns in the increment between adjacent measurement positions is obtained simply by determining the total number of turns in the uncompensated coil, dividing that by the total length of the coil, and then multiplying by the length of $\Delta x$ to provide the number of turns in the increment $\Delta x$ between each pair of measurement positions. The voltage in that increment $\Delta x$ is simply determined by subtracting the voltage at one position from the voltage at the adjacent position. Dividing this voltage difference by the number of turns gives the $V_T$ for that increment.

The circumferential advance of the compensation winding between each pair of adjacent positions is then calculated by substituting these two values in equation 31. This is done for each pair of adjacent displacement positions until the complete, continuous compensation winding is wound upon the main coil 30.

It is advantageous to plot or tabulate the voltage for approximately each 2% increment of the length of the coil to provide approximately 50 readings over the entire range. It is preferred to begin at $x = 0$ with the core or outer slidable wall, approximately one-half of one percent inserted within the coil to eliminate any initial end effects. It has been also found it advantageous to not extend the core into approximately the last one and one-half diameters of the end of the coil because the compensation winding becomes so critical in that region that it is very difficult to compensate the transducer in that region.

**Claims**

1. Displacement measurement apparatus of the type having current conducting coil (2,30) for attachment to a first one (1) of two relatively movable bodies (1,3), an electrically conducting, non-ferromagnetic wall in telescoping relationship to said coil (2,30) and mounted to the second body (3) for axial displacement relative to the coil (2,30) for varying their relative overlap (x) and thereby vary the inductance of the coil (2,30), an AC electrical energy source (6) which is connected to apply an AC signal to the coil (2,30) at a frequency which is at least high enough that the skin depth of the wall is less than the physical depth of the wall, a detector circuit means (7) connected to the coil (2,30) for detecting a signal which is proportional to coil inductance, and a compensation winding (38) wound in coaxial relationship to said coil (2,30) characterized in that:
the compensation winding (38) has a pitch which is a decreasing function of distance from the end of the coil (2,30) which is nearest said wall when the wall and the coil (2,30) are in their least overlapping relationship, said compensation winding (38) extending along at least the entire operative length of the coil and decreasing the non-linearity of the inductance variation as a function of wall displacement.

2. Apparatus in accordance with claim 1, characterised in that said compensation winding (38) is wound upon the exterior of said coil (2,30) in the same direction as said coil (2,30) and is a continuation of the coil conductor .

3. Apparatus in accordance with claim 2, characterised in that said wall is slidable into the interior of the coil (2,30).

4. Apparatus in accordance with claim 1, characterised in that said compensation winding (38) is wound inside said coil (2,30) and in the same direction and is a continuation of the coil conductor.

5. Apparatus in accordance with claim 4 characterised in that said wall is slidable into surrounding engagement of said coil (2,30).

6. Apparatus in accordance with claim 1 or 2 or 3 or 4 or 5 characterised in that the pitch of the compensation winding (38) provides sufficient additional ampereturns of magnetomotive force to counter-belance relative losses and end effects which increase with the relative overlap (x) of said coil (2,30) and said wall.

7. Apparatus in accordance with claim 1 or 2 or 3 or 4 or 5 characterised in that the compensation winding (38) is in accordance with the relationship:

$$DELTA\ T_C\ =\ E/(2^*V_T)$$

wherein
$V_T$ = the change in voltage across the uncompensated coil (30) as the wall moves x to x + DELTA x divided by the number of turns of the uncompwnsated winding in the incremental interval DELTA x;
E = Error, the voltage difference between the change in the coil voltage of an uncompensated coil as the wall moves from x to x + DELTA x and the change in an ideal, linear, compensated coil voltage as the wall moves from x to x + DELTA x;
$DELTA\ T_C$ = number of turns of compensation winding (238) between x and x + DELTA x;
x = a first displacement from said coil end (236); and
DELTA x = the incremental displacement from the coil end (236) beyond x.

8. Apparatus in accordance with claim 1 or 2 or 3 or 4 or 5 characterised in that the compensation winding is in accordance with the relationship:

$$DELTA\ Y\ =\ E\ *\ C\ /\ (2\ *\ V_T)$$

wherein
$V_T$ = the change in voltage across the uncompensated coil (30) as the wall moves x to x + DELTA x divided by the number of turns of the uncompensated winding in the incremental interval DELTA x.
E = Error, the voltage difference between the change in the coil voltage of an uncompensated coil as the wall moves from x to x + DELTA x and the change in an ideal, linear, compensated coil voltage as the wall moves from x to x + DELTA x;
C = circumference of main, uncompensated coil DELTA Y = circumferential advance of the compensation winding as wall goes from x to x + DELTA x;
x = a first displacement from said coil end (236);and
x + DELTA x = incremtal displacement from the coil end beyond x.

9. Method for forming a compensation winding (38) upon a displacement measuring apparatus of the type having an elongated, current conducting coil (2,30) for attachment to a first one (1) of two relatively movable bodies (1,3), an electrically conducting, nonferromagnetic wall in telescoping relationship to said coil (2,30) and mounted to the second body (3) for axial displacement (x) relative to the coil for varying their relative overlap and thereby vary the inductance of the coil (2,30), an AC electrical energy source (6) which is connected to apply an AC signal to the coil (2,30) at a frequency which is at least high enough that the skin depth of the wall is less than the physical depth of the wall and a detector circuit means (7) connected to the coil (2,30) for detecting a signal which is proportional to coil inductance, characterised by:

a) recording a detected signal amplitude which is proportional to coil inductance for each of a plurality of spaced apart wall displacement positions (x + DELTA x) over an operating range of the measurement apparatus to represent the uncompensated transfer function for the signal amplitude as a function of displacement(x);

b) determining the desired, linear signal amplitude for each of said wall displacement poisitions (x + DELTA x) for a linear transfer function which is tangential to said uncompensated transfer functions at the minimum displacement;

c) determining the difference between the recorded detected amplitude and the desired linear amplitude for each of said wall displacement positions (x + DELTA x); and

d) forming a compensation winding (38) in telescoping coaxial relationship to the coil and having a current and winding direction to increase the magnetomotive force in the coil (2,30), said compensation winding having a circumferential advance DELTA Y between each pair of adjacent wall displacement positions (x + DELTA x) in accordance with the equation:

$$DELTA\ Y\ =\ (E)^*(C)/(2^*V_T)$$

wherein
E = the difference of adjacent wall displacement positions (x + DELTA x) between the difference from step (c) for one wall displacement position (x) and the difference from step (c) for the adjacent wall displacement position (x + DELTA x);

C = the circumference of said coil; and

$V_T$ = the difference for adjacent wall displacement positions (x + DELTA x) between the adjacent detected signal amplitudes from step (a) divided by the number of turns between the positions at which the adjacent readings were taken.

10. Method in accordance with claim 9 characterised in that step (a) more particulary comprises plotting a graph of the detected signal amplitudes; and

step c) comprises measuring the difference between the graph and the straight line for each of said displacement positions (x + DELTA x).

**Patentansprüche**

1. Wegaufnehmer mit einer stromleitenden Spule (2, 30) zur Befestigung an einem ersten (1) von zwei relativbewegbaren Körpern (1, 3), mit einem elektrisch leitenden, nicht-ferromagnetischen Wandkörper, der teleskopartig mit der Spule (2, 30) verbunden und am zweiten Körper (3) zur axialen Verstellung relativ zur Spule (2, 30) befestigt ist, um deren relative Überlappung (x) und dadurch die Induktivität der Spule (2, 30) zu variieren, mit einer derart angeschlossenen Wechselstromquelle (6), um ein Wechselstromsignal einer wenigstens so hohen Frequenz an die Spule (2, 30) zu legen, daß die auf dem Skineffekt basierende Eindringtiefe in den Wandkörper kleiner als dessen körperliche Wanddicke ist, und mit einer an der Spule (2, 30) angeschlossenen Detektorschaltung (7) zur Erfassung eines zur Spuleninduktivität proportionalen Signals, und mit einer koaxial zur Spule (2, 30) gewundenen Kompensationswicklung (38), dadurch gekennzeichnet, daß die Steigung der Kompensationswicklung (38) einer degressiven Distanzfunktion von demjenigen Ende der Spule (2, 30) entspricht, welches der Wand am nächsten liegt, wenn die Wand und die spule (2, 30) sich am wenigsten überlappen, wobei die Kompensationswicklung (38) sich wenigstens entlang der gesamten, wirksamen Spulenlänge erstreckt und die Nichtlinearität der Induktivitätsveränderung als Funktion der Wandverschiebung vermindert.

2. Wegaufnehmer nach Anspruch 1, dadurch gekennzeichnet, daß die Kompensationswicklung (38) auf das Äußere der Spule (2, 30) in gleicher Richtung wie die Spule (2, 30) gewunden ist und eine Fortsetzung des Spulenleiters bildet.

3. Wegaufnehmer nach Anspruch 2, dadurch gekennzeichnet, daß der Wandkörper in das Innere der Spule (2, 30) schiebbar ist.

4. Wegaufnehmer nach Anspruch 1, dadurch gekennzeichnet, daß die Kompensationswicklung (38) innerhalb der Spule (2, 30) und in gleicher Richtung gewunden ist und eine Fortsetzung des Spulenleiters bildet.

5. Wegaufnehmer nach Anspruch 4, dadurch gekennzeichnet, daß der Wandkörper in eine die Spule (2, 30) umgebende Eingriffsposition verschiebbar ist.

6. Wegaufnehmer nach Anspruch 1 oder 2 oder 3 oder 4 oder 5, dadurch gekennzeichnet, daß aufgrund der Steigung der kompensationswicklung (38) genügend zusätzliche Amperewindungen für die magnetische Spannung entstehen, um Relativverluste und Endeffekte auszugleichen, die sich mit der relativen Überlappung (x) der Spule (2, 30) und des Wandkörpers erhöhen.

7. Wegaufnehmer nach Anspruch 1 oder 2 oder 3 oder 4 oder 5, dadurch gekennzeichnet, daß die Kompensationswicklung der folgenden Beziehung genügt:

$$\Delta T_C = E / (2 * V_T)$$

mit

$V_T$ = die Spannungsänderung über der unkompensierten Spule, wenn sich der Wandkörper von x zu x + $\Delta$x geteilt durch die Anzahl der Windungen der unkompensierten Wicklung in dem Inkrementalintervall $\Delta$x bewegt;

E = Fehler, die Spannungsdifferenz zwischen der Spulenspannungsänderung einer unkompensierten Spule, wenn sich der Wandkörper von x zu x + $\Delta$x bewegt, und der Veränderung der Spannung einer idealen, linearen, kompensierten Spule, wenn sich der Wandkörper von x zu x + $\Delta$x bewegt;

$\Delta T_C$ = Anzahl der Windungen der Kompensationswicklung (38) zwischen x und x + $\Delta$x;

x = eine erste Verschiebung vom besagten Spulenende (36);

$\Delta x =$ die Inkrementalverschiebung von dem Spulenende (36) über x hinaus.

8. Wegaufnehmer nach Anspruch 1 oder 2 oder 3 oder 4 oder 5, dadurch gekennzeichnet, daß die Kompensationswicklung der folgenden Beziehung genügt:

$$\Delta y = E * C / (2 * V_T)$$

mit

$V_T =$ die Spannungsänderung über der unkompensierten Spule, wenn sich der Wandkörper von x zu x + $\Delta x$ geteilt durch die Anzahl der Windungen der unkompensierten Wicklung in dem Inkrementalintervall $\Delta x$ bewegt;

$E =$ Fehler, die Spannungsdifferenz zwischen der Spulenspannungsänderung einer unkompensierten Spule, wenn sich der Wandkörper von x zu x + $\Delta x$ bewegt, und der Veränderung der Spannung einer idealen, linearen, kompensierten Spule, wenn sich der Wandkörper von x zu x + $\Delta x$ bewegt;

$\Delta y =$ Umfangsfortschritt der Kompensationswicklung, wenn der Wandkörper von x nach x + $\Delta x$ geht;

$x =$ eine erste Verschiebung vom besagten Spulenende (36); und

$\Delta x =$ die Inkrementalverschiebung von dem Spulenende (36) über x hinaus.

9. Verfahren zur Bildung einer Kompensationswicklung (38) auf einem Wegaufnehmer mit einer stromleitenden Spule (2, 30) zur Befestigung an einem ersten (1) von zwei relativbewegbaren Körpern (1, 3), mit einem elektrisch leitenden, nicht-ferromagnetischen Wandkörper, der teleskopartig mit der Spule (2, 30) verbunden und am zweiten Körper (3) zur axialen Verstellung relativ zur Spule (2, 30) befestigt ist, um deren relative Überlappung (x) und dadurch die Induktivität der Spule (2, 30) zu variieren, mit einer derart angeschlossenen Wechselstromquelle (6), um ein Wechselstromsignal einer wenigstens so hohen Frequenz an die Spule (2, 30) zu legen, daß die auf dem Skineffekt basierende Eindringtiefe in den Wandkörper kleiner als dessen körperliche Wanddicke ist, und mit einer an der Spule (2, 30) angeschlossenen Detektorschaltung (7) zur Erfassung eines zur Spuleninduktivität proportionalen Signals, gekennzeichnet durch die folgenden Schritte:

(a) Aufnahme einer detektierten Signalamplitude, die proportional ist zur Spuleninduktivität für jede einer Vielzahl voneinander beabstandeter Wandkörper-Verschiebepositionen (x + $\Delta x$), über einen Betriebsbereich des Wegaufnehmers, so daß die unkompensierte Übertragungsfunktion für die Signalamplitude als Funktion der Verschiebung (x) repräsentiert wird;

(b) Bestimmung der gewünschten, linearen Signalamplitude für jede der besagten Wandkörper-Verschiebepositionen (x + $\Delta x$) für eine lineare Übertragungsfunktion, die tangential zu den besagten, unkompensierten Übertragungsfunktionen bei der Minimalverschiebung ist;

(c) Bestimmung der Differenz zwischen der aufgenommenen detektierten Amplitude und der gewünschten linearen Amplitude für jede der besagten Wandkörper-Verschiebepositionen (x + $\Delta x$); und

(d) Bildung einer Kompensationswicklung (38) in teleskopartiger und koaxialer Beziehung zur Spule mit einer Strom- und Windungsrichtung dergestalt, daß die magnetische Spannung in der Spule (2, 30) erhöht wird, wobei die Kompensationswicklung einen Umfangsfortschritt zwischen zwei jeweils benachbarten Wandkörper-Verschiebepositionen (x + $\Delta x$) gemäß der folgenden Gleichung aufweist:

$$\Delta y = (E) * (C) / (2 * V_T)$$

mit

$E =$ die Differenz für benachbarte Wandkörper-Verschiebepositionen (x + $\Delta x$) zwischen der differenz vom Schritt (c) für eine Wandkörper-Verschiebeposition (x) und der Differenz von Schritt (c) für die benachbarte Wandkörper-Verschiebeposition (x + $\Delta x$);

$C =$ der Umfang der Spule; und

$V_T =$ die Differenz für benachbarte Wandkörper-Verschiebepositionen (x + $\Delta x$) zwischen den benachbarten detektierten Signalamplituden vom Schritt (a) geteilt durch die Windungszahl zwischen den Positionen, bei welchen die benachbarten Aufnahmen gemacht wurden.

**10.** Verfahren nach Anspruch 9, dadurch gekennzeichnet, daß

Schritt (a) insbesondere das Aufzeichnen eines Graphen von den detektierten Signalamplituden umfaßt;

und

Schritt (c) die Messung der Differenz zwischen dem Graphen und der geraden Linie für je eine Verschiebeposition (x + $\Delta$x) umfaßt.

## Revendications

**1.** Appareil de mesure de déplacement du type possédant une bobine conductrice de courant (2,30) à attacher à un premier corps (1) parmi deux corps en déplacement relatif (1,3), une paroi électriquement conductrice, non ferromagnétique, en relation télescopique avec ladite bobine (2,30) et montée sur le deuxième corps (3) en vue d'un déplacement axial par rapport à la bobine (2,30) pour provoquer la variation de leur recouvrement relatif (x) et de cette façon la variation de l'inductance de la bobine (2,30), une source d'énergie électrique à courant alternatif (6) qui est reliée pour appliquer un signal de courant alternatif à la bobine (2,30) à une fréquence qui est au moins suffisamment haute pour que la profondeur de peau de la paroi, soit inférieure à la profondeur physique de la paroi, et un moyen de circuit détecteur (7) relié à la bobine (2,30) pour détecter un signal qui est proportionnel à l'inductance de la bobine, et un enroulement de compensation (38) enroulé en relation coaxiale avec ladite bobine (2,30) caractérisé en ce que :

l'enroulement de compensation (38) présente un pas qui est une fonction décroissante de la distance depuis l'extrémité de la bobine qui est la plus voisine de ladite paroi lorsque la paroi et la bobine sont dans leur relation de recouvrement le plus faible, ledit enroulement de compensation (38) s'étendant suivant au moins la longueur fonctionnelle entière de la bobine et diminuant la non linéarité de la variation d'inductance en fonction du déplacement de paroi.

**2.** Appareil selon la revendication 1, caractérisé en ce que ledit enroulement de compensation (38) est enroulé sur l'extérieur de ladite bobine (2,30) dans le même sens que ladite bobine (2,30) et constitue une continuation du conducteur de bobine.

**3.** Appareil selon la revendication 2, caractérisé en ce que ladite paroi peut coulisser dans l'intérieur de la bobine (2,30).

**4.** Appareil selon la revendication 1, caractérisé en ce que ledit enroulement de compensation (38) est enroulé à l'intérieur de ladite bobine (2,30) et dans le même sens et constitue une continuation du conducteur de bobine.

**5.** Appareil selon la revendication 4, caractérisé en ce que ladite paroi peut coulisser en venant en contact avec ladite bobine (2,30) et en l'entourant.

**6.** Appareil selon la revendication 1 ou 2 ou 3 ou 4 ou 5, caractérisé en ce que le pas de l'enroulement de compensation (38) forme un nombre suffisant d'ampères-tours additionnels de force magnétomotrice pour contre-balancer les pertes relatives et les effets d'extrémité qui augmentent avec le recouvrement relatif (x) de ladite bobine (2,30) et de ladite paroi.

**7.** Appareil selon la revendication 1 ou 2 ou 3 ou 4 ou 5, caractérisé en ce que l'enroulement de compensation (38) est conforme à la relation :

$$DELTA\ T_C = E/(2^*V_T)$$

dans laquelle

$V_T$ = la variation de tension entre les extrémités de la bobine non compensée (30) lorsque la paroi se déplace de x à x + DELTA x divisée par le nombre de tours de l'enroulement non compensé dans l'intervalle incrémentiel DELTA x,

E = Erreur, la différence de tension entre la variation de la tension de bobine d'une bobine non compensée lorsque la paroi se déplace de x à x + DELTA x et la variation de tension idéale, linéaire, de bobine compensée lorsque la paroi se déplace de x à x + DELTA x,

DELTA $T_C$ = nombre de tours de l'enroulement de compensation (238) entre x et x + DELTA x,

x = un premier déplacement depuis ladite extrémité de bobine (236), et

DELTA x = le déplacement incrémentiel depuis l'extrémité de bobine (236) au-delà de x.

**8.** Appareil selon le revendication 1 ou 2 du 3 ou 4 ou 5, caractérisé en ce que l'enroulement de compensation est conforme à la relation :

$$DELTA\ Y = E * C / (2 * V_T)$$

dans laquelle

$V_T$ = la variation de tension entre les extrémités de la bobine non compensée (30) lorsque la paroi se déplace de x à x + DELTA x divisée par le nombre de tours de l'enroulement non compensé dans l'intervalle incrémentiel DELTA x,

E = Erreur, la différence de tension entre la variation de la tension de bobine d'une bobine non compensée lorsque la paroi se déplace de x à x + DELTA x et la variation d'une tension idéale, linéaire, de bobine compensée lorsque la paroi se déplace de x à x + DELTA x,

C = circonférence de la bobine principale non compensée,

DELTA Y = avance circonférencielle de l'enroulement de compensation lorsque la paroi se déplace de x à x + DELTA x,

x = un premier déplacement depuis ladite extrémité de bobine (236), et

x + DELTA x = déplacement incrémentiel depuis l'extrémité de bobine au-delà de x.

9. Procédé pour former un enroulement de compensation (38) sur un appareil de mesure de déplacement du type présentant une bobine allongée (2,30) conductrice de courant, à attacher à un corps (1) parmi deux corps mobiles (1,3) l'un par rapport à l'autre, une paroi électriquement conductrice, non ferromagnétique, en relation télescopique avec ladite bobine (2,30) et montée sur le deuxième corps (3) en vue d'un déplacement axial (x) par rapport à la bobine pour provoquer la variation du recouvrement relatif et de cette façon la variation de l'inductance de la bobine (2,30), une source d'énergie électrique en courant alternatif (6) qui est reliée pour appliquer un signal de courant alternatif à la bobine (2,30) à une fréquence qui est au moins suffisamment haute pour que la profondeur de peau de la paroi soit inférieure à la profondeur physique de la paroi et un moyen de circuit détecteur (7) relié à la bobine (2,30) pour détecter un signal qui est proportionnel à l'inductance de bobine, caractérisé en ce qu'il comprend les étapes consistant à :

a) enregistrer une amplitude détectée de signal qui est proportionnelle à l'inductance de bobine pour chacune des positions parmi une pluralité de positions de déplacement de paroi, espacées entre elles (x + DELTA x) dans une plage de fonctionnement de l'appareil de mesure pour représenter la fonction de transfert non compensée de l'amplitude du signal en fonction du déplacement (x),

b) déterminer l'amplitude souhaitée, linéaire de signal pour chacune desdites positions de déplacement (x + DELTA x) de la paroi pour une fonction linéaire de transfert qui est tangentielle auxdites fonctions de transfert non compensées au déplacement minimum,

c) déterminer la différence entre l'amplitude enregistrée détectée et l'amplitude linéaire souhaitée pour chacune desdites positions de déplacement de paroi (x + DELTA x), et

d) former un enroulement de compensation (38) en relation coaxiale télescopique avec la bobine et possédant un sens de courant et d'enroulement pour augmenter la force magnétomotrice dans la bobine (2,30), ledit enroulement de compensation présentant une avance circonférencielle DELTA Y entre chaque paire de positions adjacentes de déplacement de paroi (x + DELTA x) selon l'équation :

$$DELTA\ Y\ =\ (E) * (C) / (2^*V_T)$$

dans laquelle

E = la différence pour des positions adjacentes de déplacement de paroi (x + DELTA x) entre la différence depuis l'étape (c) pour une position (x) de déplacement de paroi et la différence depuis l'étape (c) pour la position adjacente de déplacement de paroi (x + DELTA x),

C = la circonférence de ladite bobine, et

$V_T$ = la différence pour des positions adjacentes de déplacement de paroi (x + DELTA x) entre les amplitudes adjacentes détectées de signal provenant de l'étape (a) divisée par le nombre de tours entre les positions auxquelles ont été prises les lectures adjacentes.

10. Procédé selon la revendication 9 caractérisé en ce que l'étape (a) comprend de façon plus particulière le tracé d'un graphe des amplitudes détectées de signal, et

l'étape c) comprend la mesure de la différence entre le graphe et la ligne droite pour chacune desdites positions de déplacement (x + DELTA x).

FIG. 1

FIG. 2

FIG. 2A

FIG. 3